# EUROPEAN PATENT SPECIFICATION

(11) **EP 0 240 359 B1**
(45) Date of publication and mention of the grant of the patent: **09.06.1993**
(21) Application number: 87302924.3
(22) Date of filing: 03.04.1987
(51) Int. Cl.: C01B 33/26

(54) **A method of pillaring micas and the resulting pillared micas**
Aluminiumoxid enthaltende Glimmer und Verfahren zu ihrer Herstellung
Micas contenant de l'alumine et leur procédé de préparation

(30) Priority: 04.04.1986 US 848258
(43) Date of publication of application: 07.10.1987
(73) Proprietor: EXXON RESEARCH AND ENGINEERING COMPANY, Florham Park, New Jersey 07932-0390 (US)
(72) Inventor: Brody, John Francis, Bound Brook New Jersey 08805 (US); Johnson, Jack Wayne, Clinton New Jersey 08809 (US)
(74) Representative: Somers, Harold Arnold

(56) References cited:
- EP-A- 0 130 055
- WO-A-85/03016
- GB-A- 2 151 603
- US-A- 4 176 090
- US-A- 4 248 739

## Description

The present invention relates to a pillared synthetic fluorotetrasilicic mica.

In one aspect, the present invention provides a pillared fluorotetrasilicic mica having a (BET) specific surface area greater than about 75 m²/gm, e.g., from 200 m²/gm to 400 m²/gm, and wherein
the mica is pillared by alumina.

The aluminum content of the pillared mica may be at least 7% by weight.

The pillared mica may have a specific surface area of between about 75 m²/gm and 450 m²/gm.

The interlayer spacing of the mica may be between about 16 Å (1.6 nm) and about 20 Å (2.0 nm). The average interlayer spacing as measured by X-ray diffraction may be between 17 and 19 Å (1.7 and 1.9 nm).

The pillared mica may have an X-ray diffraction (XRD) pattern having a peak at 18.7 Å (1.87 nm) and 2ϑ=4.7. The X-ray diffraction pattern may be substantially:

| d (nm) | d Å (hkl) | 2ϑ CuK) | I/Iₒ |
|---|---|---|---|
| (1.87) | 18.7 (001) | 4.7 | 100 |
| (0.95) | 9.5 (002) | 9.2 | 8 |
| (0.453) | 4.53 (020, 110, 004) | 19.6 | 25 |
| (0.372) | 3.72 (005) | 23.9 | 5 |
| (0.314) | 3.14 (006) | 28.4 | 15 |
| (0.256) | 2.56 (130, 200) | 35.0 | 27 |
| (0.172) | 1.72 (150) | 53.3 | 4 |
| (0.152) | 1.52 (060) | 61.0 | 15 |

The first peak is always observed. These novel pillared mica materials are thermally and hydrothermally stable at relatively high temperatures and consequently may be used as supports for catalysts or, in some instances, as catalysts per se.

The pillared mica may additionally comprise a binder selected from silica, alumina, silica-alumina or clay.

The process used to produce this material begins with a water-swelling fluorotetrasilicic mica, preferably of the formula Na(Mg_{2.5}Si₄0₁₀F₂). The Na TSM is preferably size fractionated by, e.g., dispersal in a suitable solvent and centrifugation. The preferred size is less than 0.2 microns (0.2 µm) although larger size fractions, e.g., 0.2 to 2.0 micron (0.2 to 2.0 µm), are also useful. Preferably, an aluminum polyoxocation solution is then added to an aqueous slurry of the Na TSM in an amount larger than 3.0 meq Al₁₃⁷⁺ per gram of mica. The preferred aluminum polyoxycation is Al₁₃0₄(OH)₂₄(H₂O)₁₂⁷⁺ or similar polyoxocations. The pH in the aluminum polyoxocation-Na TSM slurry must be in the acid region and sufficient aluminum in the slurry must be present or the resulting product may either partially collapse upon heating or may not form a pillared product. The slurry is, if desired, heated to less than 200°C for a period of up to half a day. The resulting products are filtered, washed, and dried. The product, after drying, may be calcined by a staged process for several hours. After calcination, some residual alkali metal is labilized and may be removed by washing the pillared mica product with water or an aqueous ammonium salt solution. The washed product has enhanced thermal stability.

The invention also provides a process for pillaring fluorotetrasilicic mica comprising the steps of:
producing a slurry of mica in a polar solvent,
adding an aqueous solution of an aluminum polyoxocation to the mica slurry, said alumina polyoxocation being present in an amount greater than about 3.0 meq Al₁₃⁷⁺ per gram of mica,
adjusting the pH of the aluminum polyoxocation and mica slurry mixture to the acidic range,
maintaining the mixture for a period of time sufficient to produce an expanded mica,
drying and calcining the expanded mica to produce a pillared mica.

The process may additionally comprise the steps of comminuting the mica before producing the mica slurry and separating the comminuted mica into a size fraction having an average size not exceeding 2.0 microns (0 to 3.0 µm) for use in the mica slurrying step.

In the accompanying drawings, the figures provide representations as follows:
Figure 1 - Pore size distribution of pillared TSM prepared as in Example 1.
Figure 2 - X-ray powder diffraction patterns (CuK*α* radiation) of pillared TSM as a function of heat treatment, see Example 5.
Figure 3 - X-ray powder diffraction patterns (CuK*α* radiation) of pillared TSM as a function of steam treatment, see Example 6.
Figure 4 - X-ray powder diffraction patterns (CuK*α* radiation) of washed, pillared TSM as a function of steam treatment, see Example 7.
Figure 5 - X-ray powder diffraction patterns (CuK*α* radiation) of washed, pillared taeniolite as a function of steam treatment, see Example 10.

### DESCRIPTION OF THE PREFERRED EMBODIMENTS

As mentioned above, the materials used as feedstocks in the inventive process are all water swellable, fluorotetrasilicic micas. The preferred form is the Na TSM, but the sodium ion may be partially replaced by other ions such as lithium, lead, strontium or mixtures of all four. Other fluorotetrasilic micas such as lithium taeniolite, Li[LiMg₂Si₄O₁₀F₂] may also be employed.

The pillaring medium used in the process of the present invention is an aluminum polyoxocationic material. As noted above, the preferred material is an aluminum chlorohydrol solution. This material is believed to contain the cation Al₁₃O₄(OH)₂₄(H₂O)₁₂⁷⁺ although this is not known with any certainty. Generically the pillaring medium must produce in the interlayer of the mica stable pillars after the heating steps disclosed below.

An especially suitable process for pillaring the tetrasilic fluoromica includes the steps of first finely dividing and dispersing the fluoromica in water to produce a thin slurry. The step of finely dividing the mica should preferably produce particles in the size range less than 0.2 microns (0.2 µm). However, slightly larger particles, e.g., in the range of 0.2 to 2.0 microns (µm), will also operate in this process although in many commercial Na TSM materials several additional phases, notably cristobalite, are present and do not add to the reaction product. The slurry may then be neutralized with a suitable acid, e.g., HCl or HNO₃, to a pH of less than 7, preferably in the range 4.5-6, and then allowed to stand so as to settle out non-dispersed solids. The upper layer containing the dispersed mica may then be separated to yield a mica precursor suspension, e.g., 1% solids. This suspension may be used as the pillaring feed after suitable dilution or the suspension may be concentrated by e.g., freeze drying, to produce a solid which is then redispersed in a polar solvent such as water, glycol, or alcohol. The suspension is preferably produced in an aqueous form. The suspension is then intimately mixed with an appropriate amount of an aqueous solution of the pillaring medium. The mixed suspension is then desirably heated at a low level. The temperature is not particularly critical in that anything above about room temperature and below 200^{o}C is generally acceptable. Obviously the reaction vessel must be capable of withstanding the autogeneous pressure resulting from such a reaction step.

The resulting flocculated solids may be separated from the solution by filtration or centrifugation and are preferably washed thoroughly with distilled water. They may typically be dried at 100^{o} to 140^{o}C. The reaction products may then be calcined in an oxidizing or neutral atmosphere.

The catalytic and adsorbent characteristics of the pillared interlayered micas of the present invention may be modified with a wide range of cations including hydrogen, ammonium and metals of Groups IB through VIII of the Periodic Table. These products are particularly useful for reactions taking place below about 700^{o}C and requiring high specific surface area.

In general, the heat treated pillared micas of this invention have an inter layer spacing of between 16 Å (1.6 nm) and 20 Å (2.0 nm); preferably between 17.5 Å (1.75 nm) and 19 Å (1.9 nm). The BET surface area is between 75 cm²/g and 400 cm²/g; preferably between 200 cm²/g and 350 cm²/g. The X-ray diffraction pattern typically displays one or a series of 001 maxima derived from the layer spacing, along with mica hkO bands at d values of 4.53, 2.56 and 1.52 Å (0.453, 0.256 and 0.152 nm).

The heat-treated materials have an aluminum content in the range of 8 to 14% Al by weight. Of course, if an impure fraction of fluorotetrasilic mica is used in the pillaring procedure which contains non-swelling phases (e.g., cristobalite) which do not accept the aluminum polycations, the amount of aluminum in the resulting product will be proportionately lower.

The heat-treated materials have a residual interlayer alkali content that is not removed by repeated washing before the calcination step. The calcination process labilizes the residual alkali, and by washing the heat treated material with water or an aqueous ammonium salt solution, a significant fraction of the residual alkali is removed. The resulting washed, pillared mica shows enhanced thermal stability, as demonstrated in the examples.

These pillared micas are useful as adsorbents and catalytic supports. They may be combined with other inorganic oxides such as silica, alumina, silica-alumina, natural or synthetic zeolites, and other clays. Because of their surface area and pore volume, they are believed to be particularly useful as catalysts supports for catalytic cracking of heavy hydrocarbons.

Having described the basic and broad aspects of the invention, the following specific examples are given to illustrate preferred embodiments and are not offered to limit, in any way, the scope of the invention.

### EXAMPLE 1

A sample of 40 grams of an Na-TSM synthetic product supplied by TOPY Industries of Japan was dispersed in distilled water (2400 ml) by vigorous mixing in a blender. The pH of the resulting suspension was adjusted to 5 while mixing in the blender and the entire sample was transferred to four 1000 ml cylinders to stand undisturbed for 3 h. After the sedimentation period, the supernatant was siphoned off, leaving 16 grams coarse sediment that was discarded. The supernatant was centrifuged for 1 h at 2400 rpm. The resulting supernatant suspension that remained after centrifugation was decanted into stainless steel trays and freeze-dried, yielding 15.4 g of fluffy white solid. X-ray diffraction showed a layer spacing of 12.4 Å (1.24 nm) and the absence of the minor impurities cristobalite, amphibole, and MgF₂ that were present in the unfractionated sample. The BET surface was 10 m²/g.

The intermediate size fraction was isolated by freeze drying the sediment obtained in the centrifugation step, yielding 4.6 g of solid. X-ray diffraction showed substantial amount of a cristobalite (SiO₂) impurity phase in addition to the Na-TSM.

A 1g portion of the fine fraction was again dispersed in distilled water (300 ml). After the TSM was completely dispersed by stirring the suspension overnight, the aluminum chlorohydrol solution (1.20 g, Chlorhydrol 50S, Reheis Chemical) was added. The resulting viscous suspension was heated to 90^{o}C for one hour while stirring. The mixture was allowed to cool and the solid was separated by filtration, washed thoroughly with distilled water, and dried at 120^{o}C. X-ray diffraction showed the layer spacing to be 19.2 Å (1.92 nm). The sample was then placed in a muffle furnace at 200^{o}C for 2 hr., heated to 400^{o}C at 50^{o}C/h, and held at 400^{o}C for 2 hr. The layer spacing after this treatment was 18.7 Å (1.87 nm). The aluminum content was 9.3% by weight.

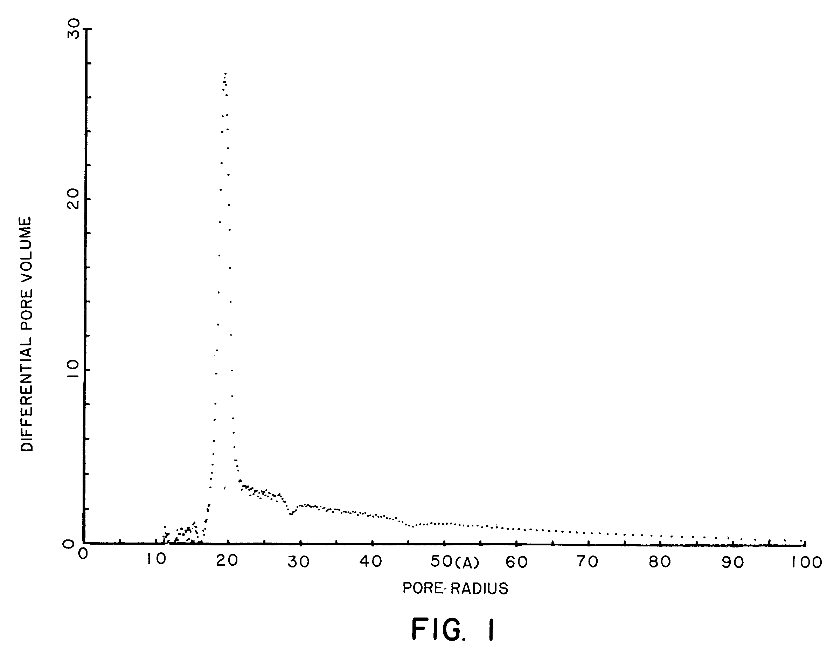

Nitrogen adsorption and desorption studies indicated the calcined sample had a surface area of 394 m²/g, a pore volume of 0.29 ml/g, and a narrow pore size distribution with a peak at 20 Å (2.0 nm) (See Figure 1). The pore volume and size distribution was calculated, from the desorption isotherm and does not include the micropores of a radius less than 10 Å (1.0 nm).

### EXAMPLE 2 (Comparative)

The process of Example 1 was repeated but the whole fraction of Na TSM, as received, was mixed with 1.5 meq Al₁₃⁷⁺ (0.6 g Chlorhydrol 50S)/gm mica in a 1% aqueous suspension. No pH adjustment was made. Only a slight flocculation upon addition of the aluminum oligomer solution was noted. After drying at 120^{o}C, the x-ray diffraction pattern showed spacings of 16.2 and 13.9 Å (1.62 and 1.39 nm) rather than the single spacing at 18-19 Å (1.8-1.9 nm) typical of a successfully pillared material. The acid balance and higher aluminum concentration in Example 1 clearly result in the production of a pillared material.

### EXAMPLE 3

The pillaring process of Example 1 was repeated using an intermediate size fraction (0.2 - 2.0 µm) of the acid balanced Na-TSM. Following calcination at 400^{o}C, a pillared TSM having a 17.8 Å (1.78 nm) layer spacing and a surface area of 218 m²/gm was produced. The X-ray diffraction pattern showed the clear presence of cristobalite as a separate phase.

### EXAMPLE 4

The product of Example 1 was heated for 2 hr. in air at successively increasing temperatures and examined by X-ray diffraction to assess its thermal stability. The results are presented in the following table.

| Temperature (^{o}C) | d(001)(Å) nm |
|---|---|
| 500 | (18.2) 1.82 |
| 544 | (18.3) 1.83 |
| 604 | (17.8) 1.78 |
| 652 | (17.7) 1.77 |
| 706 | (16.6) 1.66 |
| 756 | (10.5) 1.05 |

As can be seen in Figure 1, the crystallinity suffers with heat treatment, but the layers remain expanded up to about 700^{o}C.

### EXAMPLE 5

In a series of samples separate from those of Example 1, pillared TSM was calcined at successively higher temperatures for two-hour periods and the effect on both the surface area and the layer spacing was measured with the results as follows:

| Temperature (^{o}C) | d(001) (Å) nm | Surface area (m²/g) |
|---|---|---|
| 400 | (18.7) 1.87 | 313,306 |
| 517 | (18.5) 1.85 | 321 |
| 611 | (18.5) 1.85 | 293 |
| 718 | shoulder | 206 |

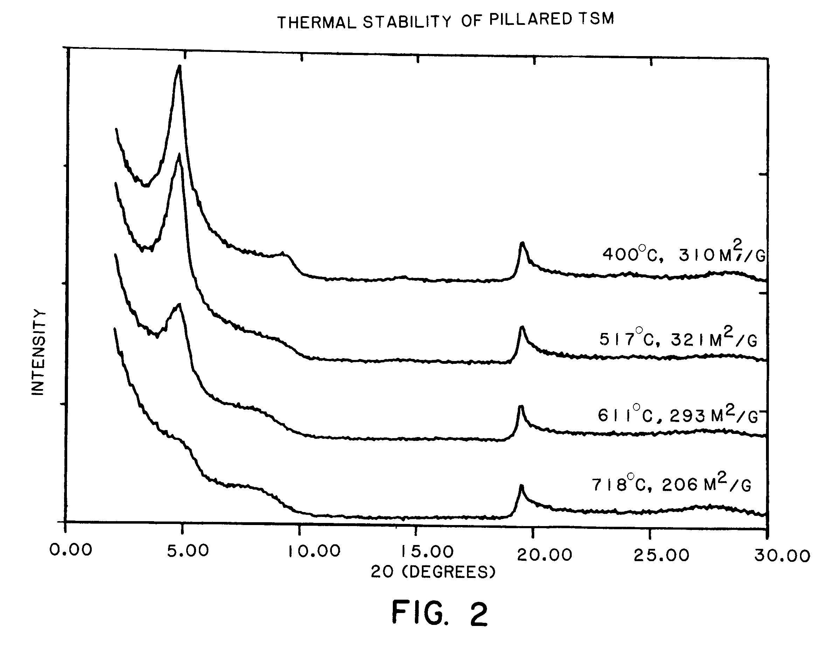

The pillared mica shows excellent thermal stability at 610^{o}C. At 718^{o}C the surface area only decreases by a third, even though the regularity in the layer spacing as determined by X-ray diffraction is almost lost. These X-ray diffraction patterns are shown in Figure 2.

### EXAMPLE 6

Separate samples of calcined pillared TSM prepared as in Example 1 were heated in an atmosphere of steam maintained by passing a stream of helium through a room temperature water reservoir and then through the furnace in which the sample was heated, resulting in a H₂O partial pressure of ca. 18 Torr. (2.399 kPa) The samples were heated in a steam atmosphere for 1 hour periods, then examined by X-ray diffraction and BET surface area analysis with the following results:

| Temperature ^{o}C | d(001)(Å) nm | surface area (m²/g) |
|---|---|---|
| 511 | (18.4) 1.84 | 306 |
| 610 | (18.2) 1.82 | 292 |
| 710 | -- | 190 |

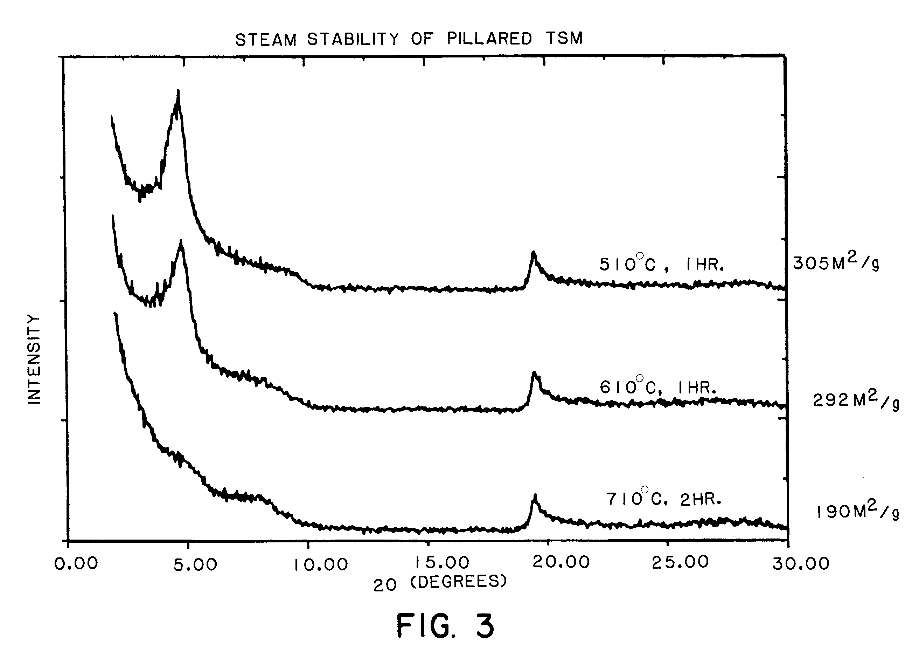

These results are very similar to those of Example 5, showing that the thermal stability is not adversely affected by the presence of steam. They are shown in Figure 3.

### EXAMPLE 7

Where pillared TSM is produced by the method of Example 1, all of the sodium is not removed by the exchange with aluminum polyoxocations. Usually about 1.0 wt% Na remains in the pillared mica, even after exhaustive washing. However, after the pillared mica has been calcined at 400^{o}C, the sodium is labilized, and can be partially (40-60%) removed by simple water washing. Calcined pillared TSM (1.5 g), prepared as in Example 1, with a measured sodium content of 0.96% and surface area of 306 m²/g was washed three times with 125 ml portions of distilled water and the solid separated by centrifugation. The resulting washed solid was dried and calcined to 400^{o}C as in Example 1. The resulting washed pillared TSM had an X-ray diffraction pattern indistinguishable from that of the precursor, a surface area of 294 m²/g, and a reduced sodium content of 0.47%. The washed pillared mica was steam treated as in Example 6, with the following results:

| Temperature ^{o}C | d(001)(Å) nm | surface area (m²/g) |
|---|---|---|
| 400 | (18.3) 1.83 | 294 |
| 518 | (18.5) 1.85 | 298 |
| 617 | (18.1) 1.81 | 290 |
| 721 | (18.1) 1.81 | 279 |

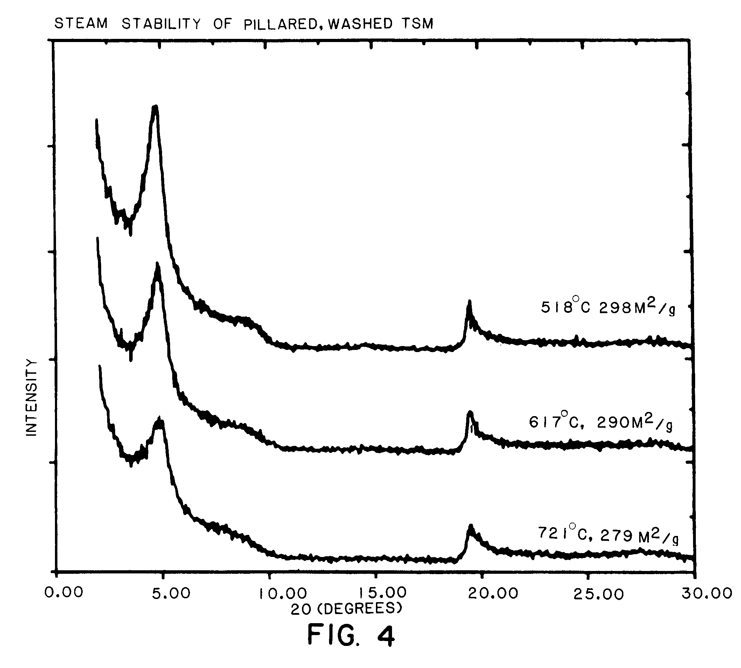

Removal of sodium by washing significantly enhances the stability of the pillared mica. These data are shown in Figure 4.

### EXAMPLE 8

Lithium taeniolite, a synthetic fluorotetrasilic mica with formula Li[LiMg₂Si₄O₁₀F₂] supplied by Topy Industries of Japan was dispersed, acid-balanced, and size-fractionated according to the method of Example 1. 5 g of the fine fraction was dispersed in 3000 ml water by stirring 24 hours. Aluminum polyoxocation solution (6.0 g chlorhydrol 50 S, Reheis Chemical) was added and the solution stirred and heated to 90^{o}C for one hour. After cooling, the solid was separated by centrifugation, washed with five 1000 ml portions of distilled water, and dried at 120^{o}C. X-ray diffraction showed the layer spacing to be 19.0 Å (1.9 nm). The solid was calcined in air at 200^{o}C and then heated at 50^{o}C/hr to 400^{o}C and held at 400^{o}C for two hours. The resulting calcined pillared mica had a layer spacing of 19.1 Å (1.91 nm), a surface area of 188 m²/g, and an aluminum content of 14.1% by weight.

### EXAMPLE 9

The pillared taeniolite of Example 8 was calcined for successive two hour periods at increasing temperature, then analyzed by X-ray diffraction and BET surface area techniques with the following results:

| Temperature ^{o}C | d(001)(Å) nm | surface area (m²/g) |
|---|---|---|
| 508 | (18.4) 1.84 | 204 |
| 605 | -- | 142 |
| 709 | -- | 65 |

This material is thermally stable to >500^{o}C. Although it is less stable and has lower surface area than pillared TSM, it still may be useful in some applications involving lower temperature service.

### EXAMPLE 10

Calcined pillared taeniolite, prepared as in Example 8, was water washed and recalcined at 400^{o}C following the procedure of Example 7. The surface area after this treatment rose to 264 m²/g and the layer spacing was 18.6 Å (1.86 nm). Steam treatment at successively higher temperatures gave the following results.

| Temperature ^{o}C | d(001)(Å) nm | surface area (m²/g) |
|---|---|---|
| 518 | (18.5) 1.85 | 276 |
| 617 | 17.9 (weak) 1.79 | 188 |
| 721 | -- | 123 |

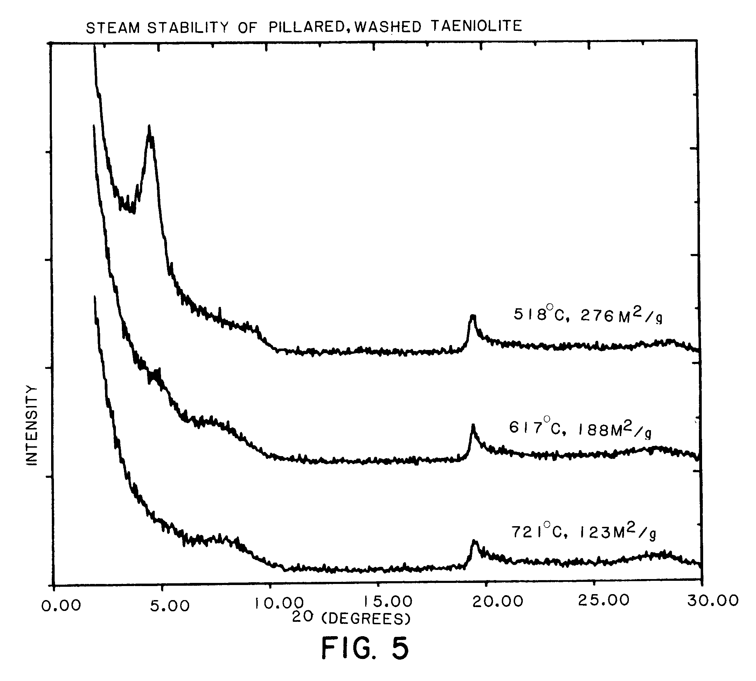

These results are shown in Figure 5.

Having thus described the invention by reference to specific examples, it will be apparent to one having ordinary skill in the art that there are feed materials and methods of producing the inventive material which are equivalent to those specifically mentioned and which are within the scope of the invention, as defined in the claims which follow.

## Claims

1. A pillared fluorotetrasilicic mica having a specific surface area greater than about 75 m²/g, and
wherein the mica is pillared by alumina.

2. The mica of claim 1 wherein the aluminum content is at least 7% by weight.

3. The mica of claim 1 or claim 2 wherein the specific surface area is between about 75 m²/g and 450 m²/g.

4. The mica of any one of claims 1 to 3 wherein the interlayer spacing of the mica is between about 16 Å (16 x 10⁻¹⁰m) and about 20 Å (20 x 10⁻¹⁰m).

5. The mica of any one of claims 1 to 4 wherein the X-ray diffraction pattern has a peak at 18.7 Å (18.7 x 10⁻¹⁰m) and 2ϑ=4.7.

6. The mica of claim 5 wherein the X-ray diffraction pattern is substantially:
| d (nm) d Å (hkl) | 2ϑ CuK) | I/Iₒ |
|---|---|---|
| (1.87) 18.7 (001) | 4.7 | 100 |
| (0.95) 9.5 (002) | 9.2 | 8 |
| (0.453) 4.53 (020, 110, 004) | 19.6 | 25 |
| (0.372) 3.72 (005) | 23.9 | 5 |
| (0.314) 3.14 (006) | 28.4 | 15 |
| (0.256) 2.56 (130, 200) | 35.0 | 27 |
| (0.172) 1.72 (150) | 53.3 | 4 |
| (0.152) 1.52 (060) | 61.0 | 15 |

7. The mica of any one of claims 1 to 6 additionally comprising a binder selected from silica, alumina, silica-alumina or clay.

8. A process for pillaring fluorotetrasilicic mica comprising the steps of:
producing a slurry of mica in a polar solvent,
adding an aqueous solution of an aluminium polyoxocation to the mica slurry, said polyoxocation being present in an amount greater than about 3.0 meq Al₁₃⁷⁺ per gram of mica,
adjusting the pH of the aluminum polyoxocation and mica slurry mixture to the acidic range,
maintaining the mixture for a period of time sufficient
to produce an expanded mica,
drying and calcining the expanded mica to produce a pillared mica.

9. The process of claims 8 additionally comprising the steps of comminuting the mica before producing the mica slurry and separating the comminuted mica into a size fraction having an average size not exceeding 2.0 microns (0 to 2.0 µm) for use in the mica slurrying step.

## Patentansprüche

1. Mit Zwischenlagerungen versehener Fluortetrakieselsäure-Glimmer mit einer spezifischen Oberfläche von mehr als etwa 75 m²/g, wobei der Glimmer mit Zwischenlagerungen aus Aluminiumoxid versehen ist.

2. Glimmer nach Anspruch 1, bei dem der Aluminiumgehalt mindestens 7 Gew.% beträgt.

3. Glimmer nach Anspruch 1 oder Anspruch 2, bei dem die spezifische Oberfläche zwischen 75 m²/g und 450 m²/g liegt.

4. Glimmer nach einem der Ansprüche 1 bis 3, bei dem der Zwischenschichtabstand des Glimmers zwischen etwa 16 Å (16 x 10⁻¹⁰ m) und etwa 20 Å (20 x 10⁻¹⁰ m) liegt.

5. Glimmer nach einem der Ansprüche 1 bis 4, bei dem das Röntgenbeugungsspektrum einen Peak bei 18,7 Å (18,7 x 10⁻¹⁰ m) und 2 ϑ = 4,7 besitzt.

6. Glimmer nach Anspruch 5, bei dem das Röntgenbeugungsspektrum im wesentlichen
| d (nm) | d Å (hkl) | 2 ϑ CuK) | I/I₀ |
|---|---|---|---|
| 1,87 | 18,7 (001) | 4,7 | 100 |
| 0,95 | 9,5 (002) | 9,2 | 8 |
| 0,453 | 4,53 (020, 110, 004) | 19,6 | 25 |
| 0,372 | 3,72 (005) | 23,9 | 5 |
| 0,314 | 3,14 (006) | 28,4 | 15 |
| 0,256 | 2,56 (130, 200) | 35,0 | 27 |
| 0,172 | 1,72 (150) | 53,3 | 4 |
| 0,152 | 1,52 (060) | 61,0 | 15 |
ist.

7. Glimmer nach einem der Ansprüche 1 bis 6, der zusätzlich ein Bindemittel ausgewählt aus Siliciumdioxid, Aluminiumoxid, Siliciumdioxid-Aluminiumoxid oder Ton umfaßt.

8. Verfahren, um Fluortetrakieselsäure-Glimmer mit Zwischenlagerungen zu versehen, bei dem
eine Aufschlämmung von Glimmer in einem polaren Lösungsmittel hergestellt wird,
eine wäßrige Lösung eines Aluminiumpolyoxokations zu der Glimmeraufschlämmung gegeben wird, wobei das Polyoxokation in einer Menge von mehr als etwa 3,0 mÄq Al₁₃⁷⁺ pro Gramm Glimmer vorhanden ist,
der pH-Wert der Mischung aus Aluminiumpolyoxokation und Glimmeraufschlämmung in den sauren Bereich eingestellt wird,
die Mischung für eine ausreichende Zeitdauer so gehalten wird, so daß expandierter Glimmer hergestellt wird und
der expandierte Glimmer getrocknet und calciniert wird, um mit Zwischenlagerungen versehenen Glimmer herzustellen.

9. Verfahren nach Anspruch 8, das zusätzlich die Stufen des feinen Zerkleinerns des Glimmers vor Herstellung der Glimmeraufschlämmung und das Trennen des feinzerkleinerten Glimmers in eine Größenfraktion mit einer durchschnittlichen Größe, die 2,0 µm (0 bis 2,0 µm) nicht überschreitet, zur Verwendung in der Glimmeraufschlämmungsstufe umfaßt.

## Revendications

1. Mica fluorotétrasilicique fixé sur support, ayant une surface spécifique supérieure à environ 75 m²/g, et dans lequel le mica est supporté par de l'alumine.

2. Mica selon la revendication 1, dans lequel la teneur en aluminium est d'au moins 7 % en poids.

3. Mica selon la revendication 1 ou 2, dans lequel la surface spécifique est comprise entre environ 75 et 450 m²/g.

4. Mica selon l'une quelconque des revendications 1 à 3, dans lequel l'espacement intercouche du mica est compris entre environ 16 Å (16×10⁻¹⁰ m) et environ 20 Å (20×10⁻¹⁰ m).

5. Mica selon l'une quelconque des revendications 1 à 4, dans lequel le diagramme de diffraction des rayons X comporte un pic à 18,7 Å (18,7×10⁻¹⁰ m) et 2ϑ= 4,7.

6. Mica selon la revendication 5, dans lequel le diagramme de diffraction des rayons X est essentiellement:
| d (nm) | (Å) | (hkl) | 2ϑ (K du Cu) | I/Iₒ |
|---|---|---|---|---|
| 1,87 | (18,7) | (001) | 4,7 | 100 |
| 0,95 | ( 9,5) | (002) | 9,2 | 8 |
| 0,453 | ( 4,53) | (020, 110, 004) | 18,6 | 25 |
| 0,372 | ( 3,72) | (005) | 23,9 | 5 |
| 0,314 | ( 3,14) | (006) | 28,4 | 15 |
| 0,256 | ( 2,56) | (130, 200) | 35,0 | 27 |
| 0,172 | ( 1,72) | (150) | 53,3 | 4 |
| 0,152 | ( 1,52) | (060) | 61,0 | 15 |

7. Mica selon l'une quelconque ds revendications 1 à 6, comprenant en outre un liant choisi parmi la silice, l'alumine, la silice-alumine ou l'argile.

8. Procédé pour la fixation sur support de mica fluorotétrasilicique, comprenant les étapes suivantes:
préparation d'une suspension de mica dans un solvant polaire,
addition d'une solution aqueuse d'un cation polyoxo à base d'aluminium à la suspension de mica, ledit cation polyoxo étant présent en une quantité supérieure à environ 3,0 mEq de Al₁₃⁷⁺ par g de mica,
ajustement dans la région acide du pH du mélange de cation polyoxo à base d'aluminium et de suspension de mica,
maintien du mélange pendant une durée suffisante pour l'obtention de mica expansé,
séchage et calcination du mica expansé pour la production d'un mica sur support.

9. Procédé selon la revendication 8, comprenant en outre les étapes de pulvérisation du mica avant la préparation de la suspension de mica, et de séparation du mica pulvérisé en une fraction granulométrique ayant une taille moyenne de particules n'excédant pas 2,0 µm (de 0 à 2,0 µm), pour utilisation dans l'étape de mise en suspension du mica.
